# FASCICULE DE BREVET EUROPEEN

(11) **EP 2 349 522 B1**
(45) Date de publication et mention de la délivrance du brevet: **25.02.2015**
(21) Numéro de dépôt: 08804752.7
(22) Date de dépôt: 25.09.2008
(51) Int. Cl.: C02F 1/20, E21B 41/02, E21B 43/20, C02F 1/44, C02F 1/70, C02F 103/08

(54) **PROCÉDÉ DE TRAITEMENT D'EAU DE MER EN VUE DE LA PRODUCTION D'UNE EAU D'INJECTION DE FORAGE PÉTROLIER SOUS-MARIN, ET INSTALLATION CORRESPONDANTE**
VERFAHREN ZUR BEHANDLUNG VON MEERWASSER ZUR HERSTELLUNG VON INJEKTIONSWASSER FÜR UNTERSEEISCHE ERDÖLBOHRUNGEN UND ENTSPRECHENDE VORRICHTUNGEN
METHOD FOR TREATING SEA WATER WITH A VIEW TO PRODUCING INJECTION WATER FOR UNDERSEA PETROLEUM DRILLING, AND CORRESPONDING EQUIPMENT

(43) Date de publication de la demande: 03.08.2011
(73) Titulaire: Veolia Water Solutions & Technologies Support, 94417 Saint-Maurice Cedex (FR)
(72) Inventeur: BIGEONNEAU, Didier, F-94300 Vincennes (FR); SUBLET, Renaud, F-88800 Vittel (FR); SUTY, Hervé, F-94130 Nogent-sur-Marne (FR); EWANS, Wayne, Pershore Worcestershire WR10 2PL (GB)
(74) Mandataire: Provost, Antoine
(86) Numéro de dépôt international: PCT/EP2008/062865
(87) Numéro de publication internationale: WO 2010/034347

(56) Documents cités:
- GB-A- 1 531 537
- US-B1- 6 649 047
- MEMBRANA, LIQUI-CEL MEMBRANE CONTACTORS: "Semiconductor plant improves water quality by using Liqui-Cel membrane contactors for simultaneous oxygen and carbon dioxide removal from water" TECHBRIEF, [Online] no. 50, 13 février 2008 (2008-02-13), XP002517418 Charlotte, USA Extrait de l'Internet: URL:http://www.liqui-cel.com/uploads/docum ents/TB50%20Taiwan%20O2%20&%20CO2%20Remova l%20Rev13.pdf> [extrait le 2009-02-26] -& DIGITAL-DETECTIVE.CO.UK: "WebDate - screenshot establishing the date of the latest modification of the webpage of XP002517418" WEBDATE, 25 mars 2009 (2009-03-25), XP002521318
- SENGUPTA A ET AL: "Large-scale application of membrane contactors for gas transfer from or to ultrapure water" SEPARATION AND PURIFICATION TECHNOLOGY 19980827 ELSEVIER NL, vol. 14, no. 1-3, 27 août 1998 (1998-08-27), pages 189-200, XP002517117
- FRED WIESLER: "Membrane contactors reduce chemical use and blowdowns" WATER AND WASTEWATER, [Online] octobre 2003 (2003-10), XP002517118 Extrait de l'Internet: URL:http://www.liqui-cel.com/uploads/docum ents/Deoxygenation%20of%20water.pdf> [extrait le 2009-02-26]

## Description

### 1. Domaine de l'invention

Le domaine de l'invention est celui du traitement de l'eau de mer.

Plus précisément, l'invention concerne le traitement de l'eau de mer dans le cadre de la production d'eau de forage pétrolier sur des plates-formes ou bâtiments offshore.

### 2. Art antérieur et inconvénients de l'art antérieur

Le pétrole est contenu dans des roches plus ou moins poreuses et perméables.

Le processus d'extraction du pétrole comprend deux phases principales : une phase de production dite primaire et une phase de production dite secondaire.

La phase de production primaire consiste à extraire le pétrole emprisonné dans ces roches (encore appelées réservoirs) sous le seul effet de la pression qui y règne.

La phase de production secondaire consiste à poursuivre l'extraction du pétrole contenu dans ces roches en y injectant de l'eau, qui est couramment dénommée eau d'injection ou maintien de pression.

Dans le cadre des exploitations offshore, des conduites sont mises en oeuvre de façon à véhiculer l'eau d'injection, et à transporter les hydrocarbures extraits depuis les têtes de puits sous-marins jusqu'aux plateformes de production offshore.

L'eau d'injection, produite à partir d'eau de mer, doit présenter un certain niveau de qualité. Au rang des critères de qualité tels que la teneur en sel, la turbidité... figure la concentration en oxygène (O₂) dissous. En effet, l'eau d'injection doit nécessairement être désoxygénée afin de limiter la corrosion de ces conduites.

Trois principaux types de procédés de désoxygénation ont ainsi été développés et sont couramment mis en oeuvre au sein de plateformes pétrolières offshore :
- les procédés mettant en oeuvre des tours de dégazage sous vide,
- les procédés mettant en oeuvre des tours de stripping notamment grâce à du gaz de pétrole,
- le procédé catalytique MINO^{™}.

Les procédés mettant en oeuvre des tours de dégazage sous vide sont fondés sur la loi de Henry selon laquelle la solubilité d'un gaz dissous dans un liquide est directement proportionnelle à la pression partielle de ce gaz dans la vapeur en contact avec la surface du liquide.

L'abaissement de la pression totale d'une phase vapeur en contact avec une phase liquide par la création d'un vide permet ainsi de diminuer la solubilité d'un gaz dissous dans le liquide, gaz qui est transféré partiellement dans la phase vapeur jusqu'au niveau de seuil de solubilité imposé par le niveau de vide et par l'efficacité du procédé.

C'est cette différence de pression, appelée force motrice, qui est exploitée dans les tours de dégazage.

La désoxygénation au sein de tours de dégazage consiste à injecter l'eau à traiter au sommet de la tour, au sein de laquelle règne un vide, au travers d'appareillages qui dispersent l'eau en fines gouttelettes qui ruissellent sur un garnissage développant une grande surface de contact afin de faciliter le dégazage de l'oxygène. Les gaz extraits, notamment l'oxygène, mais aussi les autres gaz dissous dans l'eau (azote, dioxyde de carbone, sulfure d'hydrogène, triohalométhanes, vapeur d'eau...) sont entraînés dans le circuit de vide alors que l'eau désoxygénée est recueillie au pied de la tour.

Les procédés de stripping sont des procédés similaires mis en oeuvre dans des tours verticales, similaires aux tours sous vide, à la différence que la pression totale à l'intérieur de la colonne n'est pas abaissée. Un gaz de balayage est introduit par le bas de la colonne et circule à contre-courant (ascendant) de l'eau qui ruisselle sur le garnissage, puis est extrait en tête de colonne. Le gaz de balayage utilisé peut être de toute nature, à condition qu'il contienne une très faible concentration en oxygène, de sorte à créer une force motrice, correspondant à une différence de pression partielle, qui favorisera le transfert d'oxygène depuis l'eau vers le gaz. Il doit également être le plus possible inerte chimiquement vis-à-vis de l'eau et éviter de conférer à cette dernière des propriétés agressives ou corrosives. A titre d'exemple, il doit contenir le moins possible de gaz carbonique (CO₂) qui, une fois dissous dans l'eau, peut augmenter son acidité et par là-même son pouvoir corrosif.

Ces types de procédés présentent des inconvénients.

Le passage de l'eau dans les appareillages de distribution ainsi que le phénomène de dégazage ou de stripping s'accompagnent de la formation de bulles de gaz ou de mousse qui réduisent les performances du processus de désoxygénation. Afin de prévenir la formation de mousse, il est donc nécessaire d'avoir recours à l'utilisation de produits chimiques à vocation anti-mousse.

Une alternative à la mise en oeuvre de tels produits consiste à réduire le débit spécifique de liquide. Ceci conduit toutefois à augmenter la taille des installations de manière à pouvoir traiter un même volume d'eau.

Par ailleurs, ces procédés physiques présentent des limites d'efficacité. En pratique, les tours de dégazage permettent ainsi d'obtenir des teneurs en oxygène de l'eau de mer traitée comprises entre 50 et 100 ppb, ce qui est insuffisant. Pour atteindre le niveau souhaité d'abattement de la teneur en oxygène de l'eau de mer traitée, en pratique environ 20 ppb préférentiellement moins de 10 ppb, il conviendrait d'utiliser des installations de grandes dimensions, par exemple en montant plusieurs étages de garnissage en série. Une telle solution ne peut toutefois pas être envisagée de façon raisonnable dans la mesure où elle conduirait à la mise en oeuvre d'installations excessivement coûteuses et excessivement encombrantes.

Un niveau d'abattement de l'oxygène contenu dans l'eau de mer inférieur à 20 ppb peut cependant être atteint grâce à de telles tours de dégazage par l'utilisation de réducteurs ou d'épurateurs chimiques (de type bisulfite de sodium). Ces produits chimiques sont ajoutés au-dessus de l'eau contenue au pied de telles tours.

Le recours à de tels produits chimiques peut toutefois poser des problèmes de logistiques du fait des difficultés qui peuvent être rencontrées pour leur acheminement sur les plateformes offshore, leur stockage et leur durée de conservation limitée.

Outre les inconvénients exposés plus haut, la mise en oeuvre de tours de dégazage ou de stripping imposent également des contraintes d'installation du fait des difficultés qu'elles posent quant à la stabilisation des plateformes ou bâtiments. De plus, leur rapport poids/surface important conduit au surdimensionnement de certaines parties de structures métalliques des plateformes.

La mise en oeuvre de tours de dégazage ou de stripping présente encore l'inconvénient de manquer de flexibilité du fait que leur conception ne peut pas être adaptée facilement aux variations de qualité de l'eau de mer à traiter.

Encore un inconvénient de ces tours de dégazage ou de stripping est relatif au fait que leurs performances sont affectées par les variations hydrodynamiques. Cela se traduit par le fait que les tours de dégazage ou de stripping peuvent être difficiles à stabiliser dans le cas de variations du débit d'eau à traiter. Par ailleurs, le ratio du débit de gaz sur le débit d'eau doit être respecté faute de quoi :
- si le débit de gaz devient trop important par rapport au débit d'eau, l'écoulement de l'eau peut être affecté voir cesser, ce qui est connu sous le nom de noyage;
- si le débit d'eau devient trop important par rapport au débit de gaz, le passage du gaz peut être affecté, dont il résulte un rétromélange dans le courant de gaz.

Un autre inconvénient de la mise en oeuvre de telles tours de dégazage ou de stripping est lié au fait que l'eau en sortie de celles-ci n'est pas mise en pression, ce qui impose la mise en oeuvre de pompes de reprise pour remettre l'eau sous pression dans le réseau.

GB1531537 décrit un exemple de procédé de désoxygénation d'eau de mer par stripping à l'aide d'un gaz inerte.

Dans le procédé catalytique MINOX^{™}, qui est décrit dans la demande de brevet portant le numéro CA-A-1 222 200, la force motrice n'est pas une différence de pression mais une différence de concentration. Il consiste en effet à faire baisser la pression partielle de l'oxygène contenu dans la phase vapeur en contact avec le liquide, en le remplaçant par un gaz quasi exempt d'oxygène comme l'azote.

Ce procédé consiste donc à mélanger intimement l'azote avec l'eau de mer dans des mélangeurs statiques en série, en sortie desquels l'atmosphère gazeuse enrichie en oxygène est traitée dans une unité de combustion catalytique, qui consomme l'oxygène et régénère ainsi l'azote consommé.

Ce type de procédé nécessite la mise en oeuvre d'installations qui présentent l'avantage d'être moins encombrantes que les tours de dégazage. Toutefois, leur poids reste élevé.

Par ailleurs, la mise en oeuvre de ce procédé nécessite la plupart du temps l'emploi de produits chimiques (anti-mousse, fixateur d'oxygène, méthanol pour la combustion) avec tous les inconvénients que cela procure notamment sur un plan logistique.

Le problème de manque de flexibilité et de manque de modularité inhérent à la mise en oeuvre des tours de dégazage ou de stripping se pose de manière importante lors de l'utilisation de mélangeurs statiques dans ce procédé catalytique MINOX^{™}.

Un autre inconvénient du procédé catalytique MINOX^{™} réside dans le fait qu'un temps de mise en route important est nécessaire lorsqu'il fait froid.

Le procédé catalytique MINOX^{™} présente encore un autre inconvénient du fait que l'azote gazeux peut être entraîné dans l'eau désoxygénée ce qui peut endommager les équipements de pompage de l'eau.

### 3. Objectifs de l'invention

L'invention a notamment pour objectif de pallier ces inconvénients de l'art antérieur.

Plus précisément, un objectif de l'invention est de fournir une telle technique de traitement d'eau de mer dont la mise en oeuvre permet la production d'eau d'injection de forage sous-marins qui présente une faible teneur en oxygène dissous.

Un autre objectif de l'invention est de mettre en oeuvre une telle technique de traitement d'eau de mer qui puisse être facilement mise en oeuvre sur une plateforme offshore.

Un objectif de l'invention est également de fournir, dans au moins un mode de réalisation, une telle technique de traitement d'eau de mer dont la mise en oeuvre requiert des installations de taille et de poids réduits comparativement aux techniques de l'art antérieur.

L'invention poursuit en outre l'objectif de proposer, dans au moins un mode de réalisation, une telle technique de traitement d'eau de mer dont la mise en oeuvre conduit à limiter les contraintes d'ordre logistique.

Ainsi, l'invention a notamment pour objectif de fournir, dans au moins un mode de réalisation, une telle technique de traitement d'eau de mer dont la mise en oeuvre prévienne la formation de mousse.

Un autre objectif de l'invention, dans au moins un mode de réalisation, est la fourniture d'une telle technique de traitement d'eau de mer qui soit flexible et modulaire, c'est-à-dire qui puisse évoluer relativement facilement notamment en terme de capacités de traitement.

### 4. Exposé de l'invention

Ces objectifs, ainsi que d'autres qui apparaîtront par la suite, sont atteints à l'aide d'un procédé de traitement d'eau de mer au sein d'une installation embarquée sur une plate-forme ou un bâtiment offshore et de production d'une eau de forage pétrolier sous-marin appauvrie en oxygène initialement dissous dans ladite eau de mer.

Selon l'invention, un tel procédé comprend une étape de désoxygénation de ladite eau de mer, ladite étape de désoxygénation comprenant :
- une étape de circulation de ladite eau de mer à travers au moins une batterie intégrant une pluralité de modules membranaires montés en série et logeant chacun au moins une membrane poreuse et hydrophobe ;
- une étape de circulation à contre courant ou en travers du courant de ladite eau de mer et de façon indépendante à travers chacun desdits modules membranaires d'un gaz de balayage chimiquement inerte ayant une concentration en oxygène dissous inférieure ou égale à 5% molaire ;
- une étape de diffusion de l'oxygène depuis l'eau de mer riche en oxygène vers le gaz de balayage, l'oxygène passant à travers les membranes de séparation de l'eau et des gaz,
ladite eau de mer et ledit gaz de balayage circulant chacun d'un côté différent de ladite membrane.

Ainsi, la présente technique repose sur une approche tout à fait originale de la production d'eau d'injection à partir d'eau de mer, qui consiste notamment à obtenir le dégazage de l'eau de mer, c'est-à-dire à en abattre fortement la teneur en oxygène, en la faisant circuler à travers au moins une batterie intégrant des contacteurs à membranes hydrophobes montés en série, dans lesquels circule de façon indépendante et à contre-courant un gaz de balayage dont la teneur en oxygène est inférieure ou égale à 5 % molaire. Dans une variante il peut être prévu que le gaz de balayage circule en travers du courant de l'eau.

On notera que les membranes poreuses et hydrophobes utilisées dans les modules membranaires (appelés aussi « contacteurs à membranes ») pourront être des membranes organiques ou des membranes minérales rendues hydrophobes par un traitement spécifique connu dans l'art antérieur.

La mise en oeuvre de tels contacteurs à membranes, qui n'avaient jusqu'alors jamais été envisagée en vue de produire de l'eau d'injection, est tout à fait remarquable notamment en ce qu'elle permet :
- d'abattre de façon importante la teneur en oxygène à des valeurs inférieures à 20 ppb voir même inférieures à 10 ppb, et ce sans forcément avoir recours à des agents chimiques réducteurs d'oxygène, là où les techniques de l'art antérieur permettent d'abattre la teneur en oxygène à des valeurs comprises entre 50 et 100 ppb, ce qui ne répond pas aux attentes des exploitants,
- dans des installations dont le rapport poids/surface est relativement faible comparativement aux techniques de l'art antérieur ;
- et de désoxygéner l'eau sans recours à des produits chimiques du fait qu'elle prévient la formation de mousse, et de limiter en conséquence les contraintes d'ordre logistique.

Il est noté que l'unité ppb signifie « part per billion » soit particules par milliard. Il s'agit de microgrammes par litre que l'homme du métier à pour habitude d'exprimer en ppb.

La mise en oeuvre de membranes hydrophobes permet d'éviter que le liquide à traiter entre en contact avec le gaz, contrairement à ce qui se produit dans les techniques de l'art antérieur qui nécessitent par nature un contact intime entre l'eau et le gaz. Ceci conduit à prévenir la formation de mousse dans le liquide.

Par ailleurs, le fait que l'eau de mer et le gaz de balayage circulent à contre-courant de part et d'autre de ladite membrane et de façon indépendante dans chacun desdits contacteurs à membrane conduit à favoriser le transfert de l'oxygène dissous dans l'eau de mer vers la phase gazeuse.

Le procédé de traitement d'eau selon l'invention comprend préférentiellement au moins une étape d'injection d'au moins un agent réducteur entre deux modules membranaires consécutifs.

L'injection d'agent réducteur est particulièrement intéressante en ce qu'elle peut permettre d'atteindre des concentrations en oxygène dissous très faibles.

Selon une caractéristique préférée de l'invention, ledit gaz de balayage est de l'azote dont la pureté est supérieure à 95 % molaire.

Selon une variante, ledit gaz de balayage est de l'azote dont la pureté est supérieure ou égale à 99,9 %.

Il a en effet été constaté par la Déposante que l'emploi de tels gaz dans de telles proportions peut conduire à la production d'une eau traitée dont la teneur en oxygène peut être abattue de façon importante jusqu'à atteindre des valeurs inférieures à 30 ppb et préférentiellement inférieures à 10 ppb.

Dans un mode de réalisation avantageux, un procédé de traitement d'eau de mer selon l'invention comprend une étape de production dudit azote par un procédé de séparation des éléments de l'air ambiant, ladite étape de production étant menée sur ladite plateforme ou bâtiment offshore.

La mise en oeuvre d'une telle étape de production d'azote peut avantageusement être réalisée au moyen d'une unité dédiée qui peut être facilement embarquée sur une plateforme offshore. La production d'azote directement sur la plateforme conduit à réduire les contraintes d'ordre logistique et à réduire l'encombrement d'une installation nécessaire à la mise en oeuvre du procédé selon l'invention du fait qu'il ne devient plus nécessaire ni de prévoir l'acheminement d'azote sur la plateforme offshore, ni d'y prévoir de réservoir de stockage volumineux.

Dans une variante, ledit gaz de balayage est un gaz de pétrole contenant au moins 50% molaire de méthane.

Dans une autre variante, ledit gaz de balayage est un gaz de pétrole contenant entre 5% molaire et 30% molaire de CO₂.

Ce mode de réalisation présente l'avantage de réutiliser un sous-produit présent sur la plateforme offshore de façon à produire le gaz de balayage ce qui conduit à limiter les contraintes logistiques et de réduire les frais d'exploitation (il n'est pas nécessaire d'acheter du gaz de balayage et de le faire acheminer sur la plate-forme offshore depuis le continent).

Ce mode de réalisation permet avantageusement l'utilisation d'un gaz de pétrole ayant une forte concentration en dioxyde de carbone (> 5% molaire) sans réduire la qualité de l'eau traitée par la dissolution du dioxyde de carbone dans l'eau.

Avantageusement, la pression dudit gaz de balayage est comprise entre 20 et 250 mmHg (soit entre 2 666 et 33 320 Pa).

Une telle plage de valeur de pression du gaz de balayage peut conduire à la production d'une eau traitée dont la teneur en O₂ est inférieure à 30 ppb et préférentiellement inférieures à 10 ppb.

Selon une caractéristique avantageuse de l'invention, le temps de séjour de ladite eau de mer au sein de chacun desdits modules membranaires est compris entre 1 et 5 secondes.

Une telle durée de séjour de l'eau au sein de chacun des contacteurs conduit à un abattement convenable de l'oxygène dissous, c'est-à-dire à la production d'une eau traitée dont la teneur en O₂ est inférieure à 30 ppb et préférentiellement inférieures à 10 ppb.

Avantageusement, lesdites étapes de circulation sont précédées d'une étape de filtration sur média et/ou d'une étape de microfiltration et/ou d'une étape d'ultrafiltration. Ainsi, il est possible d'éviter l'obstruction des membranes par les matières en suspension.

Préférentiellement, lesdites étapes de circulation sont précédées ou suivies d'une étape de dessalement et/ou d'une étape de désionisation.

La mise en oeuvre d'une telle étape de dessalement et/ou de désionisation permet d'abattre la salinité et/ou la concentration en certaines espèces d'ions de l'eau de mer traitée. Ceci peut conduire, lorsque le dessalement et/ou la désionisation sont mis en oeuvre avant le passage de l'eau à travers les contacteurs à membranes, à prévenir l'obstruction des membranes par précipitation du sel et/ou des ions. Toutefois, lorsqu'une étape de dessalement est mise en oeuvre avant les étapes de circulations, les performances du procédé selon l'invention peuvent être réduite en terme de dégazage.

L'invention porte également sur une installation de traitement d'eau de mer destinée à être embarquée sur une plate-forme ou bâtiment off-shore pour la mise en oeuvre d'un procédé de traitement d'eau de mer selon l'invention en vue de la production d'une eau d'injection de forage pétrolier sous-marin appauvrie en oxygène initialement dissous dans ladite eau de mer.

Une telle installation comprend selon l'invention au moins une batterie intégrant une pluralité de modules membranaires montés en série, ladite batterie présentant une entrée reliée à une amenée d'eau à traiter et une sortie reliée à une évacuation d'eau traitée, chacun desdits modules membranaires logeant au moins une membrane poreuse et hydrophobe et présentant un raccordement d'entrée d'un gaz de balayage et un raccordement d'évacuation dudit gaz de balayage enrichi par lesdits gaz initialement dissous, ladite au moins une membrane permettant le passage de l'oxygène de l'eau vers le côté de la membrane où circulent les gaz.

Comme indiqué ci-dessus, les membranes poreuses et hydrophobes utilisées dans les modules membranaires pourront être des membranes organiques ou des membranes minérales rendues hydrophobes par un traitement spécifique connu dans l'art antérieur.

Une telle installation permet de mettre en oeuvre un procédé de traitement selon l'invention et de produire en conséquence une eau fortement appauvrie en oxygène dissous.

Préférentiellement, ladite batterie intègre 3 à 5 modules membranaires montés en série.

Dans ce cas, ladite batterie intègre avantageusement 4 modules membranaires montés en série.

Ce nombre de modules permet un traitement efficace d'une eau de mer.

Une installation selon l'invention comprend des moyens d'injection d'au moins un agent réducteur entre deux modules parmi au moins un couple de modules consécutifs afin d'injecter dans l'eau à traiter un agent chimique réducteur d'oxygène qui concoure à améliorer l'abattement de l'oxygène dissous dans l'eau.

Dans le mode de réalisation dans lequel chaque batterie intègre quatre modules, lesdits moyens d'injection sont avantageusement placés entre le deuxième et le troisième module membranaire ou entre le troisième et le quatrième module membranaire de ladite batterie.

Préférentiellement, lesdites membranes sont des membranes à fibres creuses.

Celles-ci favorisent le mélange de l'agent réducteur dans l'eau.

Selon une autre caractéristique avantageuse, lesdits modules logent au moins un élément de diversion qui s'étend essentiellement perpendiculairement à l'axe desdites membranes.

Les contacteurs à membrane se comportent alors comme des mélangeurs statiques. Ils favorisent le mélange de l'agent réducteur et de l'eau et conduisent en conséquence à réduire le temps de contact nécessaire pour que l'agent chimique réducteur d'oxygène puisse agir.

Un type de membrane pouvant être préférentiellement utilisés est décrits dans le document de brevet portant le numéro US 5 352 361.

Selon un mode de réalisation préféré, une installation de traitement selon l'invention comprend une pluralité de batteries montées en parallèle, un collecteur d'évacuation d'eau traitée, un collecteur d'amenée d'eau à traiter, ladite entrée de chacune desdites batteries étant reliée audit collecteur d'amenée et ladite sortie de chacune desdites batteries étant reliée audit collecteur d'évacuation.

La répartition des modules membranaires en plusieurs batteries en parallèle permet de diviser le flux d'eau à traiter afin de ne pas dépasser le débit maximal admissible par chaque module membranaire.

Cette architecture peut également permettre de décupler les capacités de traitement d'une telle installation.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue schématique d'un exemple d'installation pour la mise en oeuvre du procédé de traitement selon l'invention ;
- la figure 2 illustre une vue en coupe d'une membrane mise en oeuvre dans un contacteur de l'installation illustrée à la figure 1 ;
- la figure 3 illustre diverses positions d'une installation pour la mise en oeuvre du procédé selon l'invention au sein de différentes installations de traitement.

### 6. Description d'un mode de réalisation de l'invention

### 6.1. Rappel du principe de l'invention

Le principe général de l'invention repose sur la mise en oeuvre, au sein d'installations de traitement d'eau de mer embarquées sur des plateformes ou bâtiments offshore, d'au moins une batterie de contacteurs à membranes hydrophobes montés en série et à l'intérieur desquels circulent indépendament et à contre-courant de l'eau de mer et un gaz de balayage ayant une teneur en oxygène inférieure ou égale à 5 % molaire, dans le but de produire de l'eau d'injection de forage pétrolier sous-marin dont la teneur en oxygène dissous est inférieure à 30 ppb et préférentiellement inférieure à 10 ppb.

### 6.2. Exemple d'une installation pour la mise en oeuvre du procédé de traitement d'eau selon l'invention

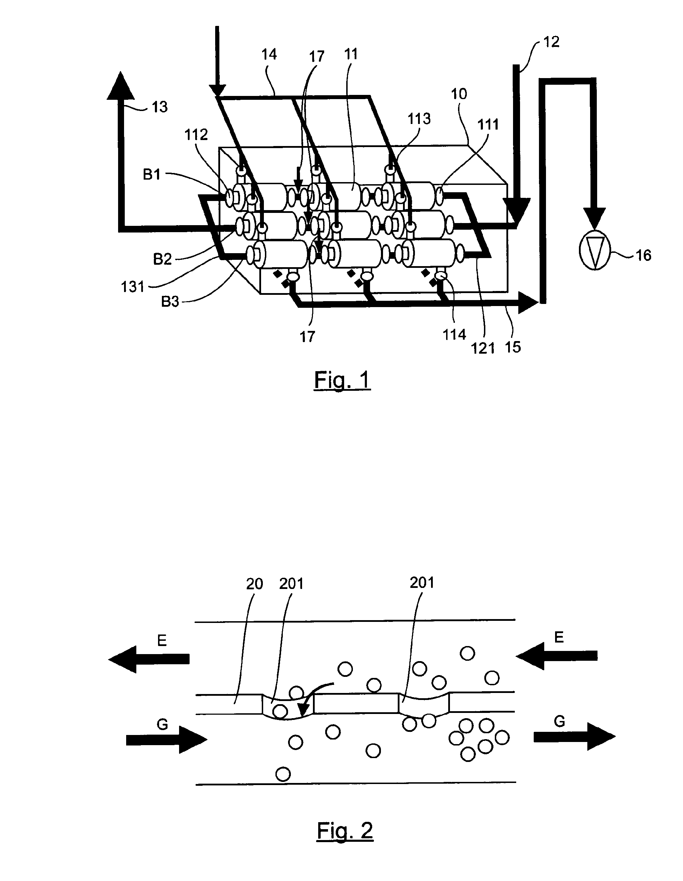

On présente, en relation avec la figure 1, un mode de réalisation d'une installation de traitement d'eau de mer destinée à être mise en oeuvre sur une plateforme offshore dans le but de produire de l'eau d'injection de forage sous-marin selon le procédé de traitement d'eau selon l'invention.

Tel que cela est représenté de façon schématique sur cette figure 1, une telle installation comprend un châssis 10 sur lequel sont solidarisées trois batteries B1, B2, B3 de modules membranaires 11. Les trois batteries B1, B2, B3 sont montées en parallèle. Chacune de ces batteries B1, B2, B3 intègre trois modules membranaires 11 qui sont montés en série. Ces modules membranaires 11 prennent la forme de contacteurs à membranes hydrophobes.

Cette architecture originale présente de nombreux avantages en ce qu'elle confère aux installations pour la mise en oeuvre du procédé selon l'invention une grande flexibilité et modularité.

Le nombre de batteries, ainsi que le nombre de modules membranaires mis en oeuvre dans chacune d'elle peut en effet varier de façon à atteindre les seuils de concentrations en gaz dissous requis et en fonction de la qualité de l'eau de mer à traiter (température, concentrations en gaz dissous...).

Par ailleurs, la répartition des modules membranaires 11 en plusieurs batteries en parallèle permet de subdiviser le flux d'eau à traiter afin de ne pas dépasser le débit maximal admissible par chaque module membranaire.

Également, le nombre de modules membranaires 11 mis en oeuvre dans une batterie peut être augmenté facilement de façon à accroître l'efficacité de l'élimination des gaz dissous. Ainsi, on comprend que plus le nombre de contacteurs mis en oeuvre est important, plus la teneur en oxygène dissous de l'eau traitée obtenue pourra être faible.

En outre, les batteries de modules membranaires 11 peuvent être arrangés dans l'ensemble des directions de l'espace, en étant placées en parallèle soit sur une même ligne horizontale, soit sur une même ligne verticale, ou encore en étant réparties en plusieurs lignes horizontales parallèles entre-elles et espacées les unes des autres (tel que cela est représenté sur la figure 1).

Dans ce mode de réalisation, chaque batterie intègre trois modules membranaires. Dans des variantes, chaque batterie pourra comprendre entre trois et cinq modules membranaires. Selon une solution préférée, le nombre de modules membranaires intégré dans chaque batterie sera égal à quatre.

Tel que cela apparaît sur cette figure 1, des moyens d'injection 17 d'au moins un agent chimique réducteur d'oxygène dans l'eau à traitée sont placés entre le deuxième et le troisième module membranaire 11 de chaque batterie B1, B2, B3. Ces moyens d'injection 17 comprennent une lance d'injection.

De façon plus générale, ces moyens d'injection sont prévus entre deux modules parmi au moins un couple de modules consécutifs, les moyens d'injection pouvant prendre la forme d'une lance, d'une canalisation, d'un raccord en T ou tout autre dispositif.

On note ainsi que lorsque chaque batterie intègre quatre modules membranaires 11, ces injecteurs sont placés soit entre le deuxième et le troisième soit entre le troisième et le quatrième module membranaire 11 de chaque batterie B1, B2, B3.

Dans une autre variante, il pourra être prévu qu'un injecteur soit prévu entre le deuxième et le troisième module et qu'un autre injecteur soit prévu entre le troisième et le quatrième module.

On note que les modules membranaires 11 peuvent être ceux qui sont commercialisés par Celgard-Membrana sous le nom Liqui-Cel® et qui font notamment l'objet du brevet américain portant le numéro US 5 352 361.

Chaque module membranaire 11 présente une entrée 111 et une sortie 112 à travers lesquelles l'eau de mer pénètre à l'intérieur du contacteur et en sort respectivement.

L'entrée 111 du premier contacteur 11 de chaque batterie constitue l'entrée de la batterie considérée. L'entrée de chaque batterie est reliée à une amenée par exemple une canalisation d'amenée 12 d'eau de mer à traiter au moyen d'un collecteur d'amenée 121.

La sortie 112 du dernier contacteur 11 de chaque batterie constitue la sortie de la batterie considérée. La sortie de chaque batterie est reliée à une évacuation par exemple une canalisation d'évacuation 13 de l'eau de mer désoxygénée au moyen d'un collecteur 131 d'évacuation d'eau traitée.

Bien sûr, lorsqu'une installation selon l'invention comprend une seule et unique batterie, la mise en oeuvre des collecteurs d'amenée 121 et d'évacuation 131 n'est pas requise.

Chaque contacteur à membranes 11 présente en outre un raccordement d'entrée 113 d'un gaz de balayage et un raccordement de sortie 114 du gaz de balayage enrichi en gaz initialement dissous dans l'eau de mer.

Le raccordement d'entrée 113 de chaque contacteur 11 est relié à un réseau d'injection d'un gaz de balayage 14. Le raccordement de sortie 114 de chaque contacteur 11 est relié à un réseau d'évacuation 15 d'un mélange de gaz de balayage et de gaz initialement dissous dans l'eau de mer à traiter.

Le réseau d'injection de gaz de balayage 14 est lui-même relié à un réseau (non représenté) de production du gaz de balayage.

Dans ce mode de réalisation, le gaz de balayage est de l'azote dont la pureté est préférentiellement supérieure à 95% molaire et avantageusement supérieure à 99,9% molaire. Celui-ci peut être obtenu au moyen d'une unité dédiée, embarquée sur la plateforme ou le bâtiment offshore, mettant en oeuvre un procédé de séparation des éléments de l'air ambiant, par exemple du type PSA (pour Pressure Swing Adsorption en anglais) ou à membranes de séparation de gaz.

Dans une variante de ce mode de réalisation, le gaz de balayage pourra être un gaz de pétrole disponible sur la plateforme offshore ou le bâtiment et qui est préférentiellement composé d'au moins 50% molaire de méthane, de divers alcanes (éthane, propane, butane...) ainsi que d'autres gaz d'hydrocarbure, de CO₂ et de vapeur d'eau.

Le réseau d'évacuation 15 est relié à des moyens permettant la création d'un vide dans la phase gazeuse, qui peuvent par exemple comprendre une pompe à vide 16, préférentiellement une pompe à vide à anneau liquide, l'anneau liquide étant de l'eau de mer simplement préfiltrée ou de l'eau potable si elle est disponible. Dans des variantes, ces moyens de création d'un vide pourront par exemple comprendre un éjecteur.

Tel que cela est décrit dans le brevet américain US 5 352 361, ce type de module membranaire loge préférentiellement des membranes à fibres creuses qui s'étendent le long d'un axe essentiellement parallèle à l'axe selon lequel l'eau à traiter circule à l'intérieur du module membranaire. Ces modules membranaires logent en outre au moins un élément de diversion de flux qui s'étend essentiellement perpendiculairement à l'axe des membranes. La mise en oeuvre de tel(s) élément(s) de diversion permet d'orienter le flux d'eau de mer à l'intérieur du module membranaire en sorte qu'il circule tangentiellement et transversalement aux fibres. La mise en oeuvre de ces éléments de diversion permet la création de phénomènes dynamiques au sein du module membranaire de telle manière qu'il se comporte comme un mélangeur statique. En d'autres termes, la mise en oeuvre de ce type de modules membranaires est particulièrement avantageuse notamment du fait qu'elle permet d'obtenir un mélange homogène entre le liquide à traiter et le où les agents réducteurs qui peuvent y être injectés et ainsi une réduction du temps de contact entre l'eau et l'agent chimique réducteur d'oxygène nécessaire pour que celui-ci puisse agir.

Comme il sera expliqué plus loin, l'injection d'agent chimique réducteur d'oxygène dans l'eau à traiter permet d'améliorer sa désoxygénation. Le fait que le module membranaire se comporte comme un mélangeur statique conduit également à favoriser la désoxygénation de l'eau de mer. Tout ceci conduit à réduire la taille des installations en évitant l'ajout à celles-ci de réservoirs de contact.

Les contacteurs 11 logent une pluralité de membranes qui peuvent être composées de fibres creuses insérées en parallèle dans un carter, de membranes planes enroulées en spirales ou superposées en tranches, ou de tout autre type de configuration permettant la création de deux compartiments distincts, l'un dédié au passage du liquide et l'autre dédié au passage du gaz.

La figure 2 illustre schématiquement une vue en coupe d'une membrane hydrophobe 20, présentant une pluralité de pores 201, mise en oeuvre dans chacun des contacteurs à membranes 11. Cette membrane est réalisée dans un matériau organique poreux (par exemple en polypropylène, en PVDF...) et est hydrophobe, c'est-à-dire que les pores 201 qui la traversent ne laissent pas passer l'eau mais laisse uniquement passer les gaz.

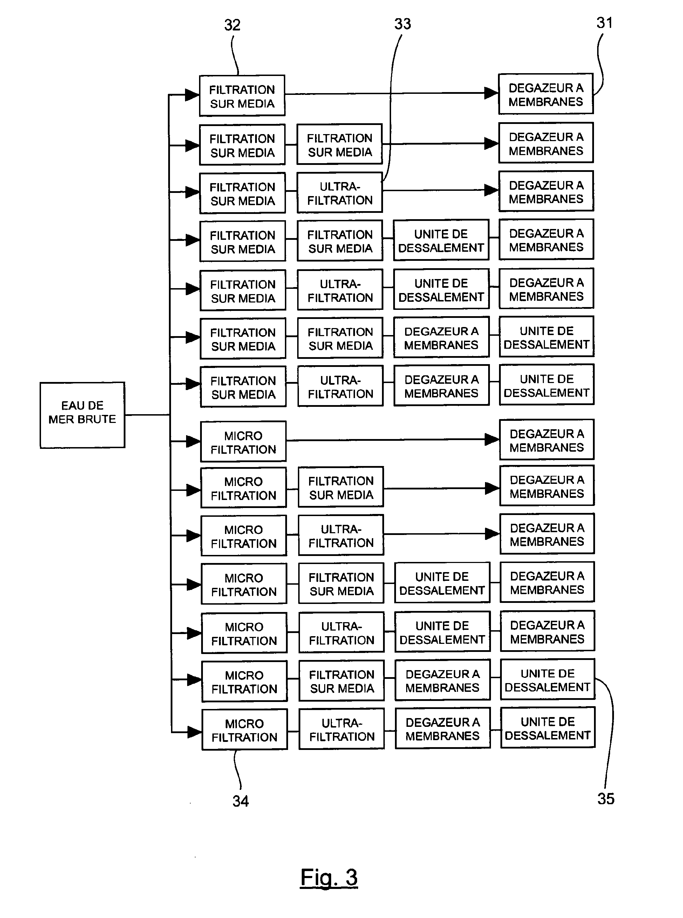

Tel que cela apparaît sur la figure 3, une installation 31 pour la mise en oeuvre d'un procédé de traitement selon l'invention peut être précédée d'installations de filtration sur média 32, d'installations d'ultrafiltration 33 sur des membranes dont le seuil de coupure est de l'ordre de 10⁻² à 10⁻¹ µm, d'installations de microfiltration 34 sur des membranes dont le seuil de coupure est de l'ordre de 10⁻¹ à 1 µm. On entend par filtration sur média tout type de filtration mécanique comprenant un matériau granulaire ou fibreux et un support de matériau, par exemple filtre à sable, filtre bi-couche, filtre multimédia, filtre à diatomées, filtre à précouche chargé de fibre à base de feutre... Une installation pour la mise en oeuvre d'un procédé selon l'invention peut également être précédée et/ou suivie d'installations de dessalement ou de désionisation sélective 35 par exemple par osmose inverse ou nanofiltration.

Un procédé de traitement d'eau de mer en vue de la production d'eau d'injection de forage sous-marins, selon l'invention, va maintenant être décrit.

### 6.3. Procédé de traitement d'eau selon l'invention

Un procédé de traitement d'eau de mer selon l'invention peut consister à faire passer de l'eau de mer à traiter dans une installation telle que celle qui a été décrite plus haut.

L'eau de mer à traiter est injectée via la canalisation d'amenée 12 et le collecteur d'amenée 121 dans le premier contacteur 11 de chaque batterie, alors que le gaz de balayage, qui est ici de l'azote dont la pureté est préférentiellement supérieure à 95 % et avantageusement supérieur à 99,9% molaire, est injecté via le réseau 14 et les raccordements d'entrée 113 dans chacun des contacteurs 11.

Il est rappelé que dans une variante, le gaz de balayage pourra être un gaz de pétrole disponible sur la plateforme offshore et qui est préférentiellement composé d'au moins 50% molaire de méthane. L'eau de mer (flèches E) et le gaz de balayage (flèches G) circulent alors à contre-courant chacun d'un côté différent des membranes hydrophobes, de façon indépendante au sein de chacun des contacteurs 11.

Un gaz de pétrole contient une certaine quantité de CO₂. De ce fait, l'homme de métier considère que son utilisation en tant que gaz de balayage est inappropriée. Il estime en effet qu'il y aurait un risque que le CO₂ qu'il contient, ou à tout le moins une partie de celui-ci, soit transféré dans l'eau au cours du traitement, ce qui conduirait à acidifier l'eau.

La Demanderesse a démontré qu'un gaz de pétrole pouvait être utilisé en tant que gaz de balayage, ce qui constitue un avantage certain. Ce gaz, qui est produit directement sur l'installation offshore au cours de l'extraction du pétrole, constitue une ressource directement disponible. L'utilisation d'un tel gaz permet d'éviter de générer de l'azote sur la plate-forme et donc de réduire les coûts d'exploitation de l'installation.

Parallèlement, les moyens de création d'un vide sont mis en oeuvre de façon à ce que la pression du côté du gaz de balayage soit abaissée à une pression inférieure à 250 mmHg (soit environ 33 320 Pa), et préférentiellement en dessous de 50 mm Hg.

La pression du côté du liquide étant supérieure à celle régnant du côté du gaz de balayage, l'interface gaz/liquide est immobilisée au niveau des pores des membranes.

La création d'une dépression dans la phase gazeuse et l'emploi d'un gaz de balayage dont la teneur en oxygène est quasiment nulle (teneur en oxygène préférentiellement inférieure ou égale à 5% molaire) permet d'utiliser une force motrice qui est en fait la combinaison de deux forces motrices pour éliminer l'oxygène dissous dans l'eau de mer :
- l'abaissement de la pression totale de la phase vapeur par la création du vide ;
- l'abaissement de la pression partielle de l'oxygène en appauvrissant la teneur en oxygène de la phase gazeuse en la remplaçant par un gaz pauvre en oxygène, en l'occurrence de l'azote de pureté d'au moins 95% et préférentiellement au-dessus de 99,9% molaire.

Ainsi, du fait de la faible teneur en oxygène du gaz de balayage et de sa faible pression, la solubilité de l'oxygène dissous, ainsi que celle d'autres gaz dissous dans l'eau de mer, diminue de sorte que l'oxygène initialement dissous dans l'eau de mer passe à travers les pores des membranes hydrophobes et se mélange avec le gaz de balayage.

Le taux d'abattement de l'oxygène dissous initialement dans l'eau de mer peut encore être diminué davantage. Pour cela, il peut être prévu dans une variante que des injections d'agent chimique réducteur d'oxygène dans l'eau de mer puissent être réalisées. Tel que cela à déjà été indiqué, au moins une injection est pratiquée entre deux contacteurs consécutifs.

Dans l'installation décrite plus haut, l'injection de réducteur se fait par l'activation des injecteurs 17 qui sont placés entre le deuxième et le troisième contacteur 11 de chacune des batteries. Dans une variante dans laquelle chaque batterie intègre quatre contacteurs 11, il est préférentiellement prévu que ces injecteurs soient placés soit entre le deuxième et le troisième contacteur, soit entre le troisième et le quatrième contacteur.

Il peut également être prévu la mise en oeuvre d'une étape de filtration sur média et/ou d'une étape de microfiltration et/ou d'une étape d'ultrafiltration préalablement à la mise en oeuvre des étapes de circulation de l'eau de mer et de circulation du gaz de balayage.

Il peut encore être prévu la mise en oeuvre d'une étape de dessalement et/ou d'une étape de désionisation antérieurement ou successivement aux étapes de circulation.

Ceci peut notamment permettre de prévenir la précipitation des sels et des ions sur les membranes.

Dans une autre variante, il peut être prévu de mettre en oeuvre une étape de séparation gaz/liquide à la sortie du dispositif de vide afin de séparer les condensats de vapeur d'eau de la phase gazeuse.

### 6.4. Essais

Une installation du type de celle décrite ci-dessus, mais comprenant une seule batterie de trois modules membranaires Liqui-Cel ® de trois pouces et demi montés en série a été testée.

Lors d'un premier test, l'installation a été mise en oeuvre sans injection d'agent chimique réducteur d'oxygène.

On a utilisé un débit d'eau de mer en entrée de 130 l/h, ladite eau présentant par ailleurs une température de 15 °C et une salinité de 39 g/l.

De l'azote pur à 99,9 % molaire a été utilisé en tant que gaz de balayage, à une pression de 80 mm Hg (10664 Pa) et un débit de 0,1 Nm³/h par module membranaire.

La concentration en oxygène dissous de l'eau de mer entrant dans l'installation a été mesurée et s'est révélée être de 8058 ppb.

La concentration en oxygène dissous de l'eau de mer a également été mesurée à la sortie du premier module, à la sortie du deuxième module et à la sortie du troisième module.

À la sortie du premier module, la concentration de l'eau en oxygène dissous était de 634 ppb. À la sortie du second module, la concentration en oxygène dissous de celle-ci était de 82 ppb. Enfin à la sortie du troisième module, la concentration de l'eau en oxygène dissous n'était plus que de 17 ppb.

Lors d'un second test, l'injection d'un agent réducteur, à savoir du bisulfite de sodium (commercialisé sous la dénomination Hydrex ®1320 ) entre le deuxième module et le troisième module de l'installation, à une dose de 1mg/l , a été simulée grâce à un logiciel adéquat. Cette simulation informatique a permis d'évaluer à moins de 5 ppb, la teneur en oxygène dissous qui serait atteinte si une telle injection était effectivement mise en oeuvre.

### 6.5. Avantages conférés par l'invention

La mise en oeuvre d'un procédé de traitement d'eau de mer selon l'invention confère de nombreux avantages comparativement aux techniques de l'art antérieur classiquement mises en oeuvre au sein des plateformes offshore.

Notamment, elle permet de produire, sans injection d'agent chimique réducteur d'oxygène, une eau traitée dont la teneur en oxygène dissous est inférieure à 30 ppb. Un tel niveau de performance ne peut être atteint de manière économique par les techniques de l'art antérieur sans injection d'agent chimique réducteur d'oxygène.

La technique permet de surcroît, avec ou sans injection d'agent chimique réducteur d'oxygène, de produire une eau dont la teneur en oxygène dissous est inférieure à 10 ppb. Un tel niveau de performance ne peut être atteint par les techniques de l'art antérieur sans injection d'agent chimique réducteur d'oxygène.

Elle permet la production d'eau d'injection conforme aux standards imposés par les producteurs de pétrole tout en limitant le recours à des produits chimiques.

En outre, un procédé selon l'invention présente une grande flexibilité et modularité dans la mesure où il peut être mis en oeuvre dans des installations dont les capacités peuvent facilement évoluer en fonction des variations de débit d'eau à traiter, de changement de la qualité de l'eau (température, concentration en gaz dissous) par simple adjonction ou suppression de contacteurs. Ceci est particulièrement avantageux comparativement aux techniques de l'art antérieur. En effet, une hausse des capacités d'une tour de dégazage sous vide ou de stripping ou d'un procédé MINOX^{™} nécessite la construction d'une nouvelle unité en parallèle.

Le poids d'une installation selon l'invention est nettement inférieur au poids des installations selon l'art antérieur notamment des tours de dégazage sous vide ou de stripping qui sont lourdes du fait de la quantité d'eau retenue dans le volume de la colonne en fonctionnement.

À titre d'exemple, le poids total en charge, comprenant l'eau contenue dans l'installation en fonctionnement, estimé pour une unité de traitement de désoxygénation d'eau de mer d'une capacité de 13 500 m³/h est :
- 150 tonnes pour une tour sous vide (ou une tour de stripping) ;
- 50 à 80 tonnes pour une installation pour la mise en oeuvre du procédé MINOX^{™} ;
- 30 tonnes pour une installation pour la mise en oeuvre du procédé selon l'invention.

La mise en oeuvre d'un procédé selon l'invention permet ainsi un gain de poids d'au moins 40% et de potentiellement 60% par rapport au procédé MINOX^{™}, et de 50% et potentiellement 90% par rapport à une tour sous vide ou de stripping.

La surface spécifique représente la surface d'échange entre le gaz et le liquide pour un volume donné. La surface spécifique d'une installation pour la mise en oeuvre du procédé selon l'invention peut être supérieure à 5000 m²/m³, alors que celle d'une tour sous vide ou de stripping est habituellement comprise entre 50 et 500 m²/m³. La mise en oeuvre d'un procédé selon l'invention permet ainsi à un utilisateur d'obtenir un gain d'espace par rapport à une tour sous vide ou de stripping compris entre 50 et 80%. De même le gain d'espace qu'il permet d'obtenir comparativement à la mise en oeuvre d'un procédé MINOX^{™} est compris entre 5 et 30%.

## Revendications

1. Procédé de production, sur une plate-forme ou un bâtiment offshore, d'une eau d'injection de forage pétrolier sous-marin appauvrie en oxygène à partir d'eau de mer,
**caractérisé en ce qu'**il comprend une étape de désoxygénation de ladite eau de mer, ladite étape de désoxygénation comprenant :
- une étape de circulation de ladite eau de mer à travers au moins une batterie intégrant une pluralité de modules membranaires montés en série et logeant chacun au moins une membrane poreuse et hydrophobe ;
- une étape de circulation à contre courant ou en travers du courant de ladite eau de mer et de façon indépendante à travers chacun desdits modules membranaires d'un gaz de balayage chimiquement inerte ayant une concentration en oxygène dissous inférieure ou égale à 5% molaire,
ladite eau de mer et ledit gaz de balayage circulant chacun d'un côté différent de ladite membrane.

2. Procédé selon la revendications 1 **caractérisé en ce qu'**il comprend au moins une étape d'injection d'au moins un agent réducteur entre deux modules membranaires consécutifs.

3. Procédé selon la revendication 1 ou 2, **caractérisé en ce que** ledit gaz de balayage est de l'azote dont la pureté est supérieure ou égale à 95%.

4. Procédé selon la revendication 1 ou 2, **caractérisé en ce que** ledit gaz de balayage est de l'azote dont la pureté est supérieure ou égale à 99,9 %.

5. Procédé selon l'une quelconque des revendications 3 ou 4, **caractérisé en ce qu'**il comprend une étape de production dudit azote par un procédé de séparation des éléments de l'air ambiant, ladite étape de production étant mise en oeuvre sur ladite plateforme ou bâtiment.

6. Procédé selon la revendication 1 ou 2, **caractérisé en ce que** ledit gaz de balayage est un gaz de pétrole contenant entre 5% molaire et 30% molaire de CO₂.

7. Procédé selon la revendication 6, **caractérisé en ce que** ledit gaz de pétrole contient au moins 50% molaire de méthane.

8. Procédé selon l'une quelconque des revendications 1 à 7, **caractérisé en ce que** la pression dudit gaz de balayage est comprise entre 20 et 250 mmHg (soit entre 2 666 et 33 320 Pa).

9. Procédé selon l'une quelconque des revendications 1 à 8, **caractérisé en ce que** le temps de séjour de ladite eau de mer au sein de chacun desdits modules membranaires est compris entre 1 et 5 secondes.

10. Procédé selon l'une quelconque des revendications 1 à 9, **caractérisé en ce que** lesdites étapes de circulation sont précédées d'une étape de filtration sur média et/ou d'une étape de microfiltration et/ou d'une étape d'ultrafiltration.

11. Procédé selon l'une quelconque des revendications 1 à 10, **caractérisé en ce que** lesdites étapes de circulation sont précédées ou suivies d'une étape de dessalement et/ou d'une étape de désionisation.

12. Installation de production d'une eau d'injection de forage pétrolier sous-marin appauvrie en oxygène à partir d'eau de mer pour la mise en oeuvre d'un procédé selon l'une quelconque des revendications 2 à 11, ladite installation étant destinée à être embarquée sur une plate-forme ou un bâtiment off-shore,
**caractérisée en ce qu'**elle comprend au moins une batterie (B1, B2, B3) intégrant une pluralité de modules membranaires (11) montés en série, ladite batterie (B1, B2, B3) présentant une entrée (111) reliée à une amenée d'eau (12) à traiter et une sortie (112) reliée à une évacuation d'eau traitée (13), chacun desdits modules membranaires (11) logeant au moins une membrane poreuse et hydrophobe (20) et présentant un raccordement d'entrée (113) d'un gaz de balayage et un raccordement d'évacuation (114) dudit gaz de balayage enrichi par lesdits oxygène initialement dissous,
et **en ce qu'**elle comprend des moyens d'injection (17) d'au moins un agent réducteur entre deux modules (11) parmi au moins un couple de modules (11) consécutifs.

13. Installation selon la revendication 12, **caractérisée en ce que** ladite batterie (B1, B2, B3) intègre 3 à 5 modules membranaires (11) montés en série.

14. Installation selon la revendication 13, **caractérisée en ce que** ladite batterie (B1, B2, B3) intègre 4 modules membranaires (11) montés en série.

15. Installation selon la revendication 14, **caractérisée en ce que** lesdits moyens d'injection (17) sont placés entre le deuxième et le troisième module membranaire (11) et/ou entre le troisième et le quatrième module membranaire (11) de ladite batterie (B1, B2, B3).

16. Installation selon l'une quelconque des revendications 12 à 15, **caractérisée en ce que** lesdites membranes (20) sont des membranes à fibres creuses.

17. Installation selon l'une quelconques des revendications 12 à 16, **caractérisée en ce que** lesdits modules (11) logent au moins un élément de diversion de flux qui s'étend essentiellement perpendiculairement à l'axe desdites membranes (20).

18. Installation selon l'une quelconque des revendications 12 à 17, **caractérisé en ce qu'**elle comprend :
- une pluralité de batteries (B1, B2, B3) montées en parallèles ;
- un collecteur d'évacuation d'eau traitée (131) ;
- un collecteur d'amenée d'eau à traiter (121) ;
ladite entrée (111) de chacune desdites batteries (B1, B2, B3) étant reliée audit collecteur d'amenée (121) et ladite sortie (112) de chacune desdites batterie (B1, B2, B3) étant reliée audit collecteur d'évacuation (131).

## Patentansprüche

1. Verfahren zur Herstellung, auf einer Offshore-Plattform oder einem Offshore-Bauwerk, eines Einpresswassers für unterseeische Erdölbohrungen, welches an Sauerstoff abgereichert ist und aus Meerwasser gewonnen wird,
**dadurch gekennzeichnet, dass** es einen Schritt der Sauerstoffentfernung aus dem Meerwasser umfasst, wobei der Schritt der Sauerstoffentfernung Folgendes umfasst:
- einen Durchleitschritt, in welchem das Meerwasser durch mindestens eine Batterie geleitet wird, welche mehrere Membranmodule umfasst, die in Reihe geschaltet sind und jeweils mindestens eine poröse und hydrophobe Membran beinhalten;
- einen Schritt, in welchem ein chemisch inertes Spülgas, dessen Konzentration an Gelöstemsauerstoff höchstens 5 mol-% beträgt, in Gegenstromrichtung oder quer zum Strom des Meerwassers geleitet wird, wobei es jedes der Membranmodule auf unabhängige Weise durchströmt,
wobei das Meerwasser und das Spülgas jeweils auf unterschiedlichen Seiten der Membran durchgeleitet werden.

2. Verfahren nach Anspruch 1, **dadurch gekennzeichnet, dass** es mindestens einen Schritt umfasst, in welchem mindestens ein Reduktionsmittel zwischen zwei aufeinanderfolgenden Membranmodulen eingeleitet wird.

3. Verfahren nach Anspruch 1 oder 2, **dadurch gekennzeichnet, dass** es sich bei dem Spülgas um Stickstoff handelt, dessen Reinheit mindestens 95 % beträgt.

4. Verfahren nach Anspruch 1 oder 2, **dadurch gekennzeichnet, dass** es sich bei dem Spülgas um Stickstoff handelt, dessen Reinheit mindestens 99,9 % beträgt.

5. Verfahren nach einem beliebigen der Ansprüche 3 oder 4, **dadurch gekennzeichnet, dass** es einen Gewinnungsschritt umfasst, in welchem der Stickstoff mittels eines Verfahrens zur Abscheidung der Elemente der Umgebungsluft gewonnen wird, wobei der Gewinnungsschritt auf der Plattform oder dem Bauwerk durchführt wird.

6. Verfahren nach Anspruch 1 oder 2, **dadurch gekennzeichnet, dass** es sich bei dem Spülgas um ein Gas aus der Erdölförderung handelt, das zwischen 5 mol-% und 30 mol-% an CO₂ enthält.

7. Verfahren nach Anspruch 6, **dadurch gekennzeichnet, dass** das Gas aus der Erdölförderung mindestens 50 mol-% an Methan enthält.

8. Verfahren nach einem beliebigen der Ansprüche 1 bis 7, **dadurch gekennzeichnet, dass** der Druck des Spülgases im Bereich von 20 bis 250 mmHg (entsprechend 2.666 bis 33.320 Pa) liegt.

9. Verfahren nach einem beliebigen der Ansprüche 1 bis 8, **dadurch gekennzeichnet, dass** die Verweildauer des Meerwassers in jedem der Membranmodule im Bereich von 1 bis 5 Sekunden liegt.

10. Verfahren nach einem beliebigen der Ansprüche 1 bis 9, **dadurch gekennzeichnet, dass** den Durchleitschritten ein mediengestützter Filtrationsschritt und/oder ein Mikrofiltrationsschritt und/oder ein Ultrafiltrationsschritt vorgeschaltet ist/sind.

11. Verfahren nach einem beliebigen der Ansprüche 1 bis 10, **dadurch gekennzeichnet, dass** den Durchleitschritten ein Entsalzungsschritt und/oder ein Entionisierungsschritt vorgeschaltet oder nachgeschaltet ist/sind.

12. Anlage zur Herstellung eines Einpresswassers für unterseeische Erdölbohrungen, welches an Sauerstoff abgereichert ist und aus Meerwasser gewonnen wird, für die Durchführung eines Verfahrens nach einem beliebigen der Ansprüche 2 bis 11, wobei die Anlage dazu bestimmt ist, an Bord einer Offshore-Plattform oder eines Offshore-Bauwerks eingesetzt zu werden,
**dadurch gekennzeichnet, dass** sie mindestens eine Batterie (B1, B2, B3) umfasst, welche mehrere Membranmodule (11) umfasst, die in Reihe geschaltet sind, wobei die Batterie (B1, B2, B3) eine Eintrittsöffnung (111), welche mit einer Zuleitung (12) für zu behandelndes Wasser verbunden ist, und eine Austrittsöffnung (112), welche mit einer Abließen (13) für behandeltes Wasser verbunden ist, aufweist, wobei die Membranmodule (11) jeweils mindestens eine poröse und hydrophobe Membran (20) beinhalten und einen Anschluss (113) für den Zutritt eines Spülgases und einen Anschluss (114) für die Abführung des Spülgases, welches an ursprünglich gelöstem Sauerstoff angereichert ist, aufweisen,
und dadurch, dass sie Mittel (17) zum Einleiten mindestens eines Reduktionsmittels zwischen zwei Membranmodulen (11) von mindestens einem Paar aufeinanderfolgender Membranmodule (11) umfasst.

13. Anlage nach Anspruch 12, **dadurch gekennzeichnet, dass** die Batterie (B1, B2, B3) 3 bis 5 Membranmodule (11) beinhaltet, die in Reihe geschaltet sind.

14. Anlage nach Anspruch 13, **dadurch gekennzeichnet, dass** die Batterie (B1, B2, B3) 4 Membranmodule (11) beinhaltet, die in Reihe geschaltet sind.

15. Anlage nach Anspruch 14, **dadurch gekennzeichnet, dass** die Mittel zum Einleiten (17) zwischen dem zweiten und dem dritten Membranmodul (11) und/oder zwischen dem dritten und dem vierten Membranmodul (11) der Batterie (B1, B2, B3) angeordnet sind.

16. Anlage nach einem beliebigen der Ansprüche 12 bis 15, **dadurch gekennzeichnet, dass** es sich bei den Membranen (20) um Hohlfasermembranen handelt.

17. Anlage nach einem beliebigen der Ansprüche 12 bis 16, **dadurch gekennzeichnet, dass** die Membranmodule (11) mindestens ein Element zum Ablenken der Strömung beinhalten, welches sich im Wesentlichen rechtwinklig zur Achse der Membranen (20) erstreckt.

18. Anlage nach einem beliebigen der Ansprüche 12 bis 17, **dadurch gekennzeichnet, dass** sie Folgendes umfasst:
- mehrere Batterien (B1, B2, B3), die parallel geschaltet sind;
- eine Sammelvorrichtung (131) zur Abführung behandelten Wassers;
- eine Sammelvorrichtung (121) zur Zuleitung zu behandelnden Wassers;
wobei die Eintrittsöffnung (111) jeder der Batterien (B1, B2, B3) mit der Sammelvorrichtung (121) zur Zuleitung (121) verbunden ist und die Austrittsöffnung (112) jeder der Batterien (B1, B2, B3) mit der Sammelvorrichtung (131) zur Abführung (131) verbunden ist.

## Claims

1. Method for producing, on an offshore platform or construction, undersea oil drilling injection water depleted in oxygen from seawater,
**characterised in that** it comprises a deoxygenation step of said seawater, said deoxygenation step comprising:
- a circulation step of said seawater via at least one battery incorporating a plurality of membrane modules assembled in series and each housing at least one porous and hydrophobic membrane;
- a circulation step in counter-current or through the flow of said seawater and independently via each of said membrane modules of a chemically inert scavenging gas having a dissolved oxygen concentration less than or equal to 5% molar,
said seawater and said scavenging gas each circulating on a different side of said membrane.

2. Method according to claim 1 **characterised in that** it comprises at least one injection step of at least one reducing agent between two consecutive membrane modules.

3. Method according to claim 1 or 2, **characterised in that** said scavenging gas is nitrogen wherein the purity is greater than or equal to 95%.

4. Method according to claim 1 or 2, **characterised in that** said scavenging gas is nitrogen wherein the purity is greater than or equal to 99.9%.

5. Method according to any of claims 3 or 4, **characterised in that** it comprises a production step of said nitrogen by means of an ambient air element separation method, said production step being conducted on said offshore platform or construction.

6. Method according to claim 1 or 2, **characterised in that** said scavenging gas is a petroleum gas containing between 5% molar and 30% molar of CO₂.

7. Method according to claim 6 **characterized in that** said petroleum gas contains at least 50% molar of methane.

8. Seawater treatment method according to any of claims 1 to 7, **characterised in that** the pressure of said scavenging gas is between 20 and 250 mmHg (i.e. between 2666 and 33,320 Pa).

9. Method according to any of claims 1 to 8, **characterised in that** the contact time of said seawater in each of said membrane modules is between 1 and 5 seconds.

10. Method according to any of claims 1 to 9, **characterised in that** said circulation steps are preceded by a media filtration step and/or a microfiltration step and/or an ultrafiltration step.

11. Method according to any of claims 1 to 10, **characterised in that** said circulation steps are preceded or followed by a desalination step and/or a deionisation step.

12. Installation for the production of undersea oil drilling injection water depleted in oxygen from seawater by implementation of a method according to any of claims 1 to 11, said installation intended to be placed onboard an offshore platform or construction,
**characterised in that** it comprises at least one battery (B1, B2, B3) incorporating a plurality of membrane modules (11) assembled in series, said battery (B1, B2, B3) having an inlet (111) connected to a water supply (12) to be treated and an outlet (112) connected to a treated water evacuation (13), each of said membrane modules (11) housing at least one porous and hydrophobic membrane (20) and having a scavenging gas inlet connection (113) and an evacuation connection (114) of said scavenging gas enriched with said initially dissolved oxygen and **in that** it further comprises injection means (17) of at least one reducing agent between two modules (11) among at least one couple of consecutive modules (11).

13. Installation according to claim 12, **characterised in that** said battery (B1, B2, B3) incorporates 3 to 5 membrane modules (11) assembled in series.

14. Installation according to claim 13, **characterised in that** said battery (B1, B2, B3) incorporates 4 membrane modules (11) assembled in series.

15. Installation according to claims 14, **characterised in that** said injection means (17) are placed between the second and the third membrane module (11) and/or between the third and the fourth membrane module (11) of said battery (B1, B2, B2).

16. Installation according to any of claims 12 to 15, **characterised in that** said membranes (20) are hollow fibre membranes.

17. Installation according to any of claims 12 to 16, **characterised in that** said modules (11) house at least one flow diversion element which essentially extends perpendicularly to the axis of said membranes (20).

18. Installation according to any of claims 12 to 17, **characterised in that** it comprises:
- a plurality of batteries (B1, B2, B3) assembled in parallel;
- a treated water evacuation manifold (131);
- a supply manifold of water to be treated (121);
said inlet (111) of each of said batteries (B1, B2, B3) being connected to said supply manifold (121) and said outlet (112) of each of said batteries (B1, B2, B3) being connected to said evacuation manifold (131).
